# EUROPEAN PATENT APPLICATION

(11) **EP 3 623 354 A1**
(43) Date of publication of application: **18.03.2020**
(21) Application number: 18194597.3
(22) Date of filing: 14.09.2018
(51) Int. Cl.: C04B 28/02, C04B 40/00, C04B 20/10

(54) **STEARATE-COATED NANO-CALCIUM CARBONATE FOR CONCRETE WATERPROOFING**

(71) Applicant: SIKA TECHNOLOGY AG, 6340 Baar (CH)
(72) Inventor: Liska, Martin, Cambridge, Cambridgeshire CB23 8ST (GB); Hinchcliffe, Peter, Welwyn, Hertfordshire AL7 4EZ (GB)
(74) Representative: Sika Patent Attorneys

(57) **Abstract**

The invention relates to the use of inorganic particles having a hydrophobic coating or of an integral waterproof admixture, comprising the inorganic particles having a hydrophobic coating for integral waterproofing of concrete or mortar.

## Description

### Technical field

The invention is directed to the use of inorganic particles having a hydrophobic coating for integral waterproofing of concrete or mortar, waterproof concrete or mortar including said coated inorganic particles, a method for preparing said waterproof concrete or mortar, and an integral waterproof admixture for waterproofing of concrete or mortar including said coated inorganic particles.

### Background of the invention

Concrete has an affinity to water and therefore is a wettable material. Water enters the concrete through continuous capillaries either under hydrostatic pressure or by capillary action. The porosity of concrete is one of the major factors contributing to ingress of water into the concrete. Several methods are known to prevent water ingress into concretes or mortars.

Traditional methods are based on coatings or sheet membranes applied to a concrete structure after it has been constructed to keep moisture out.

An alternative method of waterproofing concrete is to use integral waterproofing admixtures (IWA). They are mixed within concrete during batching. They alter the internal structure of the concrete so that after it hardens it resists water penetration. Water can penetrate within the porous network within the concrete by permeability under pressure or by capillary absorption.

The waterproofing admixtures usually address these two mechanism by containing materials, which enable pore blocking to offset the permeability under pressure as well as materials imparting water repellency to the pore structure, therefore preventing from water ingress due to capillary rise.

The current integral waterproofing admixtures can contain pore blockers, which are most commonly microsilica, and water repellents, which are most commonly salts of fatty acids, for example calcium stearate. Fatty acids may be used as a precursor, which react in concrete with calcium hydroxide yielding the respective fatty acid salt, for instance calcium stearate. Alternative water repellents used in such admixtures are e.g. silanes or siloxanes.

Although calcium stearate is relatively cost effective when compared to other materials capable to impart hydrophobicity or water repellent properties such as silanes or siloxanes, it is one of the most expensive components in the formulation of integral waterproofing admixtures. Therefore identifying a component, which would demonstrate the same benefit at a reduced cost would be greatly beneficial from commercial point of view.

### Summary of the invention

The object of the invention was to provide a cost effective alternative for impartment of water resistance to concrete or mortar. Further, the object was to provide an integral waterproofing admixture at lower costs compared to prior art products, wherein the water resistant properties imparted to concrete or mortar are equal or similar to those imparted by prior art products.

The inventors found that cost effective hydrophobically coated particles work well as a water repellent agent for concrete and mortars.

Accordingly, the present invention is related to the use of inorganic particles having a hydrophobic coating or of an integral waterproof admixture, comprising the inorganic particles having a hydrophobic coating for integral waterproofing of concrete or mortar.

The inorganic particles having a coating of hydrophobic material are surprisingly capable to achieve very similar performance as the pure hydrophobic material with respect to imparting waterproofing properties to concretes or mortars, when the same amounts of coated inorganic particle and pure hydrophobic material, respectively, are used. That means that significantly lower amounts of hydrophobic material are necessary to achieve a particular water resistant effect, when the coated inorganic materials are used instead of the hydrophobic material as such.

At the same time, the cost for the coated inorganic particles is significantly lower than the cost of the pure hydrophobic material. The coated inorganic particles may be e.g. half or even one third cheaper than the hydrophobic material on which the coating of the coated inorganic particle is based.

Moreover, since the coated inorganic particles are usually extremely fine particles, they can serve as a hydration accelerator of cement in concrete as was observed during the developmental work. This is an additional benefit of the invention.

Details given in the following equally apply to the use of the inorganic particles having hydrophobic particles, the waterproof concrete or mortar, the method for preparing the waterproof concrete or mortar, and the integral waterproof admixture, where applicable and unless otherwise stated.

### Brief description of the figures

Fig. 1 is a schematic cross section view of an inorganic particle having a hydrophobic coating used according to the invention.
Fig. 2 is a schematic cross section view of a particle made of a hydrophobic material used in the prior art.

### Detailed description of the invention

According to the invention, inorganic particles having a hydrophobic coating or an integral waterproof admixture, comprising the inorganic particles having a hydrophobic coating, is used for integral waterproofing of concrete or mortar.

As mentioned above, waterproofing of concrete or mortar refers to make the concrete or mortar resistant or more resistant to liquid such as water to prevent liquid ingress such as water ingress or lower the penetration of liquid such as water into the concrete or mortar. Such concretes or mortars are generally called waterproof concrete or waterproof mortar. The liquid such as water can be in liquid form or gaseous form (moisture).

Integral waterproofing means that the one or more additives imparting the waterproofing properties are contained in the concrete or mortar. This is achieved by mixing the one or more integral waterproofing additives into the concrete or mortar composition before it is hardened to form the concrete or mortar product.

In particular, the inorganic particles having a hydrophobic coating are used as water repellants imparting water repellency to the pore structure of the hardened concrete or mortar by hydrophobizing the pores or capillaries, which prevents water ingress due to capillary rise.

In the present application, the terms "coated particles" or "coated inorganic particles" refer to the inorganic particles having a hydrophobic coating used according to the invention, unless otherwise stated.

The inorganic particles having a hydrophobic coating are usually fine particles, preferably nanoscale particles, i.e. particles having a number average particle size of not more than 1 µm. However, inorganic particles having a number average particle size of more than 1 µm may be also suitable. The number average particle size of the inorganic particles having a hydrophobic coating may be e.g. in the range of 5 nm to 50 µm, preferably 5 nm to 10 µm. The number average particle size of the inorganic particles having a hydrophobic coating is preferably in the range of 5 to 1000 nm, more preferably 5 to 500 nm, still more preferably 10 nm to 300 nm and most preferably 40 nm to 200 nm. The smaller the particles, the higher is the waterproofing effect imparted. On the other hand, it is to be considered that very small sizes may affect the costs and/or handling properties or may also induce properties to the concrete or mortar composition, which are not desirable.

In the present application, the particle size refers to the number average particles size (D50 value), unless otherwise stated. The number average particle size as used herein can be determined e.g. by dynamic light scattering method.

The proportion of the hydrophobic coating in the inorganic particles may vary, but it is usually in the range of 0.5 to 10 % by weight, preferably 1 to 5 % by weight, more preferably 2 to 4 % by weight, based on the total weight of the inorganic particles having a hydrophobic coating.

The particles forming the core of the coated particles are inorganic particles, i.e. made of an inorganic material. The inorganic material is preferably an inert inorganic material, which means in the present context that the inorganic material does not impart waterproofing properties to the concrete or mortar. The inorganic particle is preferably hydrophilic.

The inorganic particles may be for instance selected from oxide particles, carbonate particles, hydroxide particles, silicate particles, or a mixture thereof, which may be oxides, carbonates, hydroxides or silicates of metals or semimetals such as Ca, Mg, Fe, Na, K, Al, Si. The inorganic particles are preferably carbonate particles.

Specific examples of preferred inorganic particles are particles of calcium carbonate, magnesium carbonate and silicon dioxide.

In a preferred embodiment, the inorganic particles are calcium carbonate particles, in particular precipitated calcium carbonate particles, wherein the calcium carbonate, in particular the precipitated calcium carbonate, is preferably a microcrystalline powder.

The inorganic particles are coated with a hydrophobic coating. The hydrophobic coating is formed of a hydrophobic compound or material, which may be selected from any water repellent known in the prior art, in particular those which are used in the building industry, for hydrophobizing structures. In fact, the hydrophobic coating is preferably formed from a hydrophobic compound or material, which is used as such in the prior art for integral waterproofing of concrete or mortar. Water repellents are also called hydrophobizing agents.

The hydrophobic compound or water repellent from which the hydrophobic coating is formed is usually an organic compound, an organometallic compound, an organosilicon compound or a mixture thereof, wherein it is preferred that the compound includes at least one alkyl group.

In a preferred embodiment, the hydrophobic coating is formed of fatty acid or a salt thereof, silane, siloxane, silicone or a mixture thereof, wherein a fatty acid or a salt thereof is more preferred.

The silane is usually one or more organosilanes. A suitable silane may e.g. selected from one or more alkyl silanes, in particular alkyl silanes having at least one hydrolysable group such as alkoxy group, i.e. alkyl alkoxy silanes. The silicone may be one or more organosiloxanes or poly(organo)siloxanes, which preferably contain at least one alkyl group and optionally at least one hydroxyl group or hydrolysable group such as alkoxy. Specific examples of suitable silanes and silicones are e.g. octyltriethoxysilanes.

The hydrophobic coating is preferably formed of one or more fatty acids, preferably unsaturated fatty acids, or salt thereof, wherein the fatty acid is preferably a C₅ to C₃₀ fatty acid, more preferably a C₁₀ to C₂₄ fatty acid. The salt of the fatty acid may be a metal salt, wherein the metal may be selected from Na, K, Ca, Mg or mixtures thereof. The fatty acid or salt thereof may be a soap. Fatty acid salt as the coating of the inorganic particle may be formed by reaction of the respective fatty acid with the inorganic particle, e.g. reaction of a fatty acid with calcium carbonate particles yielding a fatty acid calcium salt coating on the particle.

In a particular preferred embodiment, the hydrophobic coating is formed of stearic acid or a salt thereof. The salt may be metal salt such as sodium stearate, potassium stearate, calcium stearate, magnesium stearate, etc., wherein calcium stearate is preferred.

In a preferred embodiment, the inorganic particles having a hydrophobic coating are calcium carbonate particles coated with fatty acid or a salt thereof, wherein the calcium carbonate is preferably precipitated calcium carbonate and/or the fatty acid or the salt thereof is preferably selected from at least one of stearic acid and salt thereof, such as calcium stearate.

In a particular preferred embodiment, the coated particle is a precipitated calcium carbonate particle which is stearate coated, wherein the number average particle size is preferably 10 nm to 300 nm, more preferably 40 nm to 200 nm, and/or the proportion of the stearate coating is preferably 1 to 5 % by weight, more preferably 2 to 4 % by weight, based on the total weight of the inorganic particles having a hydrophobic coating.

Such coated particles are commercially available. A preferred commercial product is e.g. Calofort® S also called Calofort® S precipitated calcium carbonate (pcc), manufactured/supplied by Specialty Minerals Inc., Birmingham, United Kingdom. Calofort® S is a stearate coated precipitated calcium carbonate. It is based on calcitic crystals having an average particle size of about 70 nm. The coated particles have a surface area of about 17 to 25 m²/g. The proportion of the stearate coating in the particle is about 3 % by weight.

Calofort® S is a white powder and is very similar in appearance to calcium stearate. As has been found by the inventors, Calofort® S is capable to achieve very similar performance as pure calcium stearate with respect to impart waterproofing properties to cement or mortar, but at 1/3 of the cost of calcium stearate (cf. examples).

The surprising element of the invention is that hydrophobically coated inorganic particles such as Calofort S are a highly effective water repellent at an extremely low content of hydrophobic material such as stearate. Comparatively, a very similar performance was seen for Calofort S where the stearate loading in the system is about 33 times lower than when pure calcium stearate or stearic acid would be used.

Without wishing to be bound on any theory, the possible explanation is that according to the inventive use, where water hydrophobicity is required, it is only the surface of the effective particles that provide the desired effect. In essence, the core of the particle is inactive in the system.

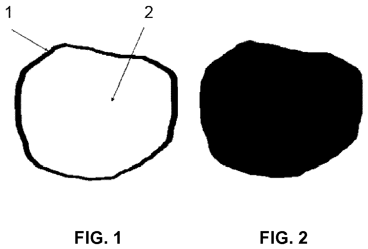

Fig. 1 is a schematic cross section view of an inorganic particle having a hydrophobic coating used according to the invention. The coated particle has an inorganic particle 2, e.g. of calcium carbonate, which is coated with hydrophobic coating 1, e.g. a stearate coating.

Fig. 2 is a schematic cross section view of a particle made of a hydrophobic material, e.g. stearate, which is used as such in the prior art.

Fig. 1 and 2 simplistically demonstrate two particles of an equal size and same hydrophobic effect, but very different content of hydrophobic material such as calcium stearate.

Therefore, if an inert inorganic particle such as calcium carbonate is coated with a hydrophobic material such as calcium stearate, the effect is very similar to that of the pure hydrophobic material such as calcium stearate, but at a substantially lower content of hydrophobic material. It also follows that any solid inorganic particle coated with a hydrophobic material will exhibit similar properties. The combination of precipitated calcium carbonate and calcium stearate is one of the most cost effective options.

As mentioned, the coated particles also acts as an accelerator to cement hydration due to its extremely small particle size.

The coated particles can be prepared by conventional coating methods, which are known by the skilled person and include e.g. dry coating, wet coating and spray coating methods. In general, such coated particles are commercially available.

The hydrophobic coating may optionally including chemically bonding of the hydrophobic coating to the inorganic particle. For instance, fatty acids or salts thereof may bond via the carboxylic group to reactive groups on the surface of the inorganic particle. Silanes and silicones may bond via hydroxyl groups or hydrolysable groups to reactive groups on the surface of the inorganic particle.

The inorganic particles having a hydrophobic coating, usually in form of a powder, may be added as such to a concrete composition or mortar composition or a precursor thereof in order to obtain after hardening the waterproof concrete or mortar. In this regard, the inorganic particles having a hydrophobic coating as such may be also considered as an integral waterproof admixture.

It is also possible that an integral waterproof admixture comprising the inorganic particles having a hydrophobic coating is added to a concrete composition or mortar composition or a precursor thereof in order to obtain after hardening the waterproof concrete or mortar.

The integral waterproof admixture comprising the inorganic particles having a hydrophobic coating may be in form of a solid, paste or liquid, wherein a solid form is preferred, in particular in form of a powder. When the integral waterproof admixture is in form of a paste or liquid, the coated inorganic particles are usually dispersed in a solvent or dispersion medium. The integral waterproof admixture comprising the inorganic particles having a hydrophobic coating may include further ingredients.

In a preferred embodiment, the integral waterproof admixture comprising the inorganic particles having a hydrophobic coating further comprises a pore blocker for cement or mortar. As mentioned above, such pore blockers are known in the prior art. The function of the pore blockers is to block or reduce pores or capillaries of a concrete or mortar structure to prevent ingress of water. The pore blockers, which are used in conventional integral waterproof admixtures may be used. The pore blockers are usually particles, in particular nanoscale particles.

Examples of suitable pore blockers are talc, bentonite, microsilica, ground granulated blastfurnace slag, calcined clays such as metakaolin, limestone, fly ash, finely divided waxes, bitumens, acrylic emulsions, SBR emulsions (SBR means styrene butadiene rubber) or a mixture thereof. The pore blocker is preferably selected from microsilica, ground granulated blastfurnace slag, metakaolin, fly ash, limestone, in particular finely ground limestone, or a mixture thereof, more preferably microsilica.

Apart from the coated particles and the optional and preferred pore blockers, the integral waterproof admixture may comprise one or more further ingredients. Examples of such further ingredients are hydraulic inorganic binders, in particular cements, superplasticizers, defoamers, fillers, stabilizers, preservatives, surfactants, dispersants, solvents or dispersion media such as water or organic solvents.

The invention also relates to a waterproof concrete or mortar, comprising inorganic particles having a hydrophobic coating or an integral waterproof admixture comprising the inorganic particles having a hydrophobic coating. The inorganic particles having a hydrophobic coating and the integral waterproof admixture have been discussed above.

The amount of the inorganic particles having a hydrophobic coating in the waterproof concrete or mortar may be e.g. from 0.05 to 5 % by volume, preferably 0.1 to 2 % by volume.

The waterproof concrete or mortar of the invention is particularly suitable for basements, water retaining structures such as swimming pools and storage tanks for liquids, roofs, etc.

The invention also relates to a process for preparing a waterproof concrete or mortar, comprising mixing the inorganic particles having a hydrophobic coating or the integral waterproof admixture with a concrete or mortar composition, comprising a hydraulic inorganic binder, aggregate and water, or with a precursor thereof, and hardening of the concrete or mortar composition including the inorganic particles having a hydrophobic coating or the integral waterproof admixture. The inorganic particles having a hydrophobic coating and the integral waterproof admixture have been discussed above.

The concrete composition or mortar composition comprises a hydraulic inorganic binder, usually cement, in particular one of the cements defined in EN 197, aggregate and water or mixing water, respectively. The concrete composition or mortar composition may include further additives, which are conventional in this field.

A precursor of the concrete composition or mortar composition refers to components of the concrete or mortar composition or to a concrete composition or mortar composition, which does not yet include all components desired.

The inorganic particles having a hydrophobic coating or the integral waterproof admixture may be e.g. added to the concrete or mortar composition to be prepared before, during or after addition of the mixing water. It is also possible to mix the inorganic particles having a hydrophobic coating or the integral waterproof admixture with the aggregate or a part thereof or with the mixing water or a part thereof, and add such mixture to the concrete or mortar composition to be prepared.

The concrete or mortar composition including the inorganic particles having a hydrophobic coating or the integral waterproof admixture subsequently hardens resulting in the waterproof concrete or mortar.

The invention also relates to an integral waterproof admixture for waterproofing of concrete or mortar, wherein the integral waterproof admixture comprises inorganic particles having a hydrophobic coating and a pore blocker for cement or mortar. The inorganic particles having a hydrophobic coating, the integral waterproof admixture, the pore blockers and possible further ingredients have been discussed above, which equally apply to the integral waterproof admixture of the invention.

In one embodiment, the integral waterproof admixture comprises a hydraulic inorganic binder, which is preferably cement, e.g. one of the cements defined in EN 197. This may simplify the mixing of the coated particles and pore blockers into the concrete or mortar composition. If a hydraulic inorganic binder is contained in the integral waterproof admixture, the hydraulic inorganic binder may be the main component of the integral waterproof admixture with respect to the weight.

Additionally, the integral waterproofing admixture may contain a superplasticizer, preferably in a powdered form, and/or a defoamer.

The superplasticizer enables to reduce the water content of the resulting concrete and thus reduce its porosity which improves its water resisting properties. Examples for superplasticisers can be based on lignosulphonates, naphthalene sulfonate-formaldehyde condensates, sulphonated melamine-formaldehyde condensates, polycarboxylate ethers or a combination thereof. Suitable superplasticizers are commercially available, an example is Viscocrete® 111p which is based on polycarboxylate ether.

The waterproofing admixtures may also contain a defoamer which removes entrained air and therefore positively affecting the ability of the concrete to resist water ingress. Examples for a defoamer may be based on an oil such as mineral oil, vegetable oil, or silicone oil, specifically a silicone oil in which hydrophobic silica is dispersed, polyethylene glycol/polypropylene glycol, and alkyl polyacrylate. Suitable defoamers are commercially available, an example is Agitan® P841.

Thus, suitable embodiments of the invention include integral waterproof admixtures further comprising at least one of a hydraulic inorganic binder, preferably cement, a superplasticizer, preferably in a powdered form, and a defoamer.

In a preferred embodiment, the integral waterproof admixture comprises 30 to 70 % by weight, preferably 40 to 60 % by weight, of the inorganic particles having a hydrophobic coating, and 15 to 70 % by weight, preferably 20 to 60 % by weight, of the pore blocker.

If present, the content of the hydraulic inorganic binder, preferably cement, in the integral waterproof admixture is preferably 5 to 50 % by weight, more preferably 15 to 40 % by weight.

If present, the content of the superplasticizer in the integral waterproof admixture is preferably 1 to 30 % by weight, more preferably 5 to 25 % by weight.

If present, the content of the defoamer in the integral waterproof admixture is preferably 1 to 10 % by weight, more preferably 3 to 8 % by weight.

In one embodiment, the integral waterproof admixture comprises 20 to 80 % by weight, preferably 40 to 60 % by weight, of the inorganic particles having a hydrophobic coating, 15 to 60 % by weight, preferably 20 to 50 % by weight, of the pore blocker, and 5 to 50 % by weight, preferably 15 to 40 % by weight, of the hydraulic inorganic binder.

In one embodiment, the integral waterproof admixture comprises 20 to 80 % by weight, preferably 40 to 60 % by weight, of the inorganic particles having a hydrophobic coating, 10 to 60 % by weight, preferably 20 to 50 % by weight, of the pore blocker, and 5 to 50 % by weight, preferably 15 to 40 % by weight, of the hydraulic inorganic binder, and 1 to 30 % by weight, preferably 5 to 20 % by weight of a superplasticizer.

In one embodiment, the integral waterproof admixture comprises 20 to 80 % by weight, preferably 40 to 60 % by weight, of the inorganic particles having a hydrophobic coating, 10 to 60 % by weight, preferably 20 to 50 % by weight, of the pore blocker, and 5 to 50 % by weight, preferably 15 to 40 % by weight, of the hydraulic inorganic binder, 1 to 30 % by weight, preferably 5 to 20 % by weight of a superplasticizer, and 1 to 10 % by weight, preferably 3 to 7% by weight of a defoamer.

In one embodiment, the integral waterproof admixture comprises 20 to 80 % by weight, preferably 40 to 60 % by weight, of the inorganic particles having a hydrophobic coating, 10 to 60 % by weight, preferably 20 to 50 % by weight, of the pore blocker, 1 to 30% by weight, preferably 5 to 25% by weight, of the superplasticizer, and 1 to 10% by weight, preferably 3 to 8% by weight, of the defoamer.

As mentioned, the integral waterproof admixture may be a solid, paste or liquid, wherein a solid, in particular a powder, is preferred.

### Examples

The waterproofing admixtures were tested in Reference Concrete I and Reference Mortar (both complying with EN 480-1) as required by EN 934-2.

### 1. Waterproofing admixture with calcium stearate (comparative example)

### Composition of waterproofing admixture:

Calcium stearate - 50% by weight
Pore blocker (finely ground limestone) - 23% by weight
Superplasticiser (Viscocrete® 111p) - 20% by weight
Defoamer (Agitan® P 841) - 7% by weight

The admixture was used in the amount of 0.5 % by volume. The comparative results of the concrete with and without (control) the waterproofing admixture:

### Initial slump (EN 12350-2) :

Control concrete: 75 mm
Concrete with waterproofing admixture: 75 mm
Plastic density (EN 12350-6) :
Control concrete: 2340 kg/m³
Concrete with waterproofing admixture: 2360 kg/m³

### Air content (EN 12350-7):

Control concrete: 1.0%
Concrete with waterproofing admixture: 0.9%

### Compressive strength at 28 days (EN 12390-3):

Control concrete: 53.4 MPa
Concrete with waterproofing admixture: 60.1 MPa

### Capillary absorption (EN 480-5) - expressed as percentage of the control:

Control concrete: 100%
Concrete with waterproofing admixture: 40.4%

### 2. Waterproofing admixture with Calofort S (inventive example)

### Composition of waterproofing admixture:

Calofort® S - 50% by weight
Pore blocker (finely ground limestone) - 23% by weight
Superplasticiser (Viscocrete® 111p) - 20% by weight
Defoamer (Agitan P 841) - 7% by weight

Calofort® S is a stearate coated precipitated calcium carbonate which has been described above.

The admixture was used in the amount of 0.5 % by volume. The comparative results of the concrete with and without (control) the waterproofing admixture:

### Initial slump (EN 12350-2) :

Control concrete: 75 mm
Concrete with waterproofing admixture: 60 mm

### Plastic density (EN 12350-6) :

Control concrete: 2350 kg/m³
Concrete with waterproofing admixture: 2400 kg/m³

### Air content (EN 12350-7):

Control concrete: 1.3%
Concrete with waterproofing admixture: 1.2%

### Compressive strength at 28 days (EN 12390-3):

Control concrete: 55.1 MPa
Concrete with waterproofing admixture: 67.3 MPa

### Capillary absorption (EN 480-5) - expressed as percentage of the control:

Control concrete: 100%
Concrete with waterproofing admixture: 41.5%

### Reference list

- 1: hydrophobic coating, e.g. stearate coating
- 2: inorganic particle, e.g. calcium carbonate particle

## Claims

1. Use of inorganic particles having a hydrophobic coating or of an integral waterproof admixture, comprising the inorganic particles having a hydrophobic coating for integral waterproofing of concrete or mortar.

2. The use according to claim 1, wherein the number average particle size of the inorganic particles having a hydrophobic coating is in the range of 5 nm to 50 µm, preferably 5 to 1000 nm, more preferably 5 to 500 nm, still more preferably 10 nm to 300 nm, most preferably 40 nm to 200 nm.

3. The use according to claim 1 or 2, wherein the proportion of the hydrophobic coating is in the range of 0.5 to 10 % by weight, preferably 1 to 5 % by weight, more preferably 2 to 4 % by weight, based on the total weight of the inorganic particles having a hydrophobic coating.

4. The use according to any of claims 1 to 3, wherein the inorganic particles are selected from oxide particles, carbonate particles, hydroxide particles, or silicate particles or a mixture thereof, wherein the inorganic particles are preferably calcium carbonate particles, in particular precipitated calcium carbonate particles.

5. The use according to any of claims 1 to 4, wherein the hydrophobic coating is formed of fatty acid or a salt thereof, silane, siloxane, silicone, or a mixture thereof, wherein the hydrophobic coating is preferably formed of stearic acid or a salt thereof.

6. The use according to any of claims 1 to 5, wherein the inorganic particles having a hydrophobic coating are calcium carbonate particles coated with fatty acid or a salt thereof, wherein the calcium carbonate is preferably precipitated calcium carbonate and/or the fatty acid or the salt thereof is preferably selected from at least one of stearic acid and calcium stearate.

7. The use according to any of claims 1 to 6, wherein the integral waterproof admixture comprising the inorganic particles having a hydrophobic coating further comprises a pore blocker for cement or mortar, wherein the pore blocker is preferably microsilica.

8. A waterproof concrete or mortar, comprising inorganic particles having a hydrophobic coating or an integral waterproof admixture comprising the inorganic particles having a hydrophobic coating.

9. The waterproof concrete or mortar according to claim 8, wherein the inorganic particles having a hydrophobic coating or the integral waterproof admixture are defined according to any one of claims 2 to 7.

10. A process for preparing a waterproof concrete or mortar, comprising mixing the inorganic particles having a hydrophobic coating or the integral waterproof admixture with a concrete or mortar composition, comprising a hydraulic inorganic binder, aggregate and water, or with a precursor thereof, and hardening of the concrete or mortar composition including the inorganic particles having a hydrophobic coating or the integral waterproof admixture.

11. The process according to claim 10, wherein the inorganic particles having a hydrophobic coating or the integral waterproof admixture are defined according to any one of claims 2 to 7.

12. An integral waterproof admixture for waterproofing of concrete or mortar, wherein the integral waterproof admixture comprises inorganic particles having a hydrophobic coating and a pore blocker for cement or mortar.

13. The integral waterproof admixture according to claim 12, wherein the pore blocker is selected from microsilica, ground granulated blastfurnace slag, metakaolin, fly ash, limestone or a mixture thereof, and/or the inorganic particles having a hydrophobic coating are defined according to any one of claims 2 to 7.

14. The integral waterproof admixture according to claim 12 or 13, further comprising at least one of a hydraulic inorganic binder, a superplasticizer, and a defoamer, wherein the hydraulic inorganic binder is preferably cement, in particular one of the cements defined in EN 197.

15. The integral waterproof admixture according to any of claims 12 to 14, comprising
a) 30 to 70 % by weight, preferably 40 to 60 % by weight, of the inorganic particles having a hydrophobic coating, and 15 to 70 % by weight, preferably 20 to 60 % by weight, of the pore blocker, or
b) 20 to 80 % by weight, preferably 40 to 60 % by weight, of the inorganic particles having a hydrophobic coating, 15 to 60 % by weight, preferably 20 to 50 % by weight, of the pore blocker, and 5 to 50 % by weight, preferably 15 to 40 % by weight, of the hydraulic inorganic binder, or
c) 20 to 80 % by weight, preferably 40 to 60 % by weight, of the inorganic particles having a hydrophobic coating, 10 to 60 % by weight, preferably 20 to 50 % by weight, of the pore blocker, and 5 to 50 % by weight, preferably 15 to 40 % by weight, of the hydraulic inorganic binder, and 1 to 30% by weight, preferably 5 to 20% by weight, of the superplasticizer, or
d) 20 to 80 % by weight, preferably 40 to 60 % by weight, of the inorganic particles having a hydrophobic coating, 10 to 60 % by weight, preferably 20 to 50 % by weight, of the pore blocker, and 5 to 50 % by weight, preferably 15 to 40 % by weight, of the hydraulic inorganic binder, and 1 to 30% by weight, preferably 5 to 20% by weight, of the superplasticizer, and 1 to 10% by weight, preferably 3 to 7% by weight, of the defoamer, or
e) 20 to 80 % by weight, preferably 40 to 60 % by weight, of the inorganic particles having a hydrophobic coating, 10 to 60 % by weight, preferably 20 to 50 % by weight, of the pore blocker, 1 to 30% by weight, preferably 5 to 25% by weight, of the superplasticizer, and 1 to 10% by weight, preferably 3 to 8% by weight, of the defoamer.
